(19) Europäisches Patentamt / European Patent Office / Office européen des brevets

(11) **EP 4 478 106 B1**

(12) **EUROPEAN PATENT SPECIFICATION**

(45) Date of publication and mention
of the grant of the patent:
**25.03.2026 Bulletin 2026/13**

(51) International Patent Classification (IPC):
**G02B 13/00** *(2006.01)*    **G02B 13/06** *(2006.01)*
**G02B 13/18** *(2006.01)*    **G02B 9/64** *(2006.01)*

(21) Application number: **24179961.8**

(22) Date of filing: **04.06.2024**

(52) Cooperative Patent Classification (CPC):
**G02B 13/0045; G02B 13/006; G02B 13/06;**
G02B 9/64; G02B 13/18

(54) **OPTICAL LENS, IMAGE MODULE, AND ELECTRONIC DEVICE**

OPTISCHE LINSE, BILDMODUL UND ELEKTRONISCHE VORRICHTUNG

LENTILLE OPTIQUE, MODULE D'IMAGE ET DISPOSITIF ÉLECTRONIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.06.2023 CN 202310664191**

(43) Date of publication of application:
**18.12.2024 Bulletin 2024/51**

(73) Proprietor: **Jiangxi OFILM Optical Co. Ltd.
Nanchang, Jiangxi 330096 (CN)**

(72) Inventors:
• **Takashi, Sugiyama
Nanchang, 330096 (CN)**
• **MASAKI, YAMAZAKI
Nanchang, 330096 (CN)**

(74) Representative: **Metida
Gyneju str. 16
01109 Vilnius (LT)**

(56) References cited:
**CN-A- 112 987 238    CN-A- 114 442 271
CN-A- 115 494 620**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The present invention relates to field of imaging, and in particular to an optical lens, an image module, and an electronic device.

BACKGROUND

With the development of the automotive industry, people have increasingly higher technical requirements for automotive lenses such as advanced driver assistant system (ADAS), driving recorders, and reversing images. The automotive lenses are not only required to be able to capture objects in a wide range, but also have increasingly higher requirements for imaging quality. However, the current field of view of the vehicle lens is still limited, and the imaging quality of the optical lens is insufficient, which is difficult to realize the miniaturization design of the automotive lens. CN 115 494 620 A discloses a compact surround-view optical lens and its working method, designed for applications like Advanced Driver-Assistance Systems (ADAS) in automobiles. The lens consists of seven lenses (L1-L7) and an aperture stop (STO) arranged sequentially, with L6 and L7 being cemented. By combining spherical and aspherical lenses and specifying various optical constraints, the design achieves a small size (total length under 16mm and outer diameter under 14mm) with a wide field of view (≥200°).

SUMMARY

According to various embodiments of the present application, an optical lens, an image module, and an electronic device are provided, which can improve the imaging quality of the optical lens while realizing the ultra-wide-angle characteristics of the optical lens, thereby achieving a thin, lightweight and miniaturized design of the optical lens.
In order to achieve the above objects, in a first aspect, the present application discloses an optical lens. The optical lens sequentially includes a first lens, a second lens, a third lens, a fourth lens, a fifth lens, a sixth lens, a seventh lens, and an image plane along an optical axis from an object side to an imaging side.
The first lens has negative refractive power, an object side surface of the first lens is convex near the optical axis, and an imaging side surface of the first lens is concave near the optical axis.
The second lens has negative refractive power, an imaging side surface of the second lens is concave near the optical axis.
The third lens has positive refractive power, an object side surface of the third lens is convex near the optical axis, an imaging side surface of the third lens is convex near the optical axis.
The fourth lens has positive refractive power, an object side surface of the fourth lens is concave near the optical axis, an imaging side surface of the fourth lens is convex near the optical axis.
The fifth lens has positive refractive power, an object side surface of the fifth lens is convex near the optical axis, an imaging side surface of the fifth lens is convex near the optical axis.
The sixth lens has negative refractive power, an imaging side surface of the sixth lens is concave near the optical axis.
The seventh lens has positive refractive power, an object side surface of the seventh lens is convex near the optical axis, an imaging side surface of the seventh lens is convex near the optical axis. The imaging side surface of the sixth lens and the object side surface of the seventh lens are cemented to form a cemented lens.
The optical lens satisfies following conditional expressions:

$$8<TTL/f<9, \text{ and } 165°<FOV<195°.$$

Wherein, R5 is a radius of curvature of the object side surface of the third lens at the optical axis, R6 is a radius of curvature of the imaging side surface of the third lens at the optical axis, R7 is a radius of curvature of the object side surface of the fourth lens at the optical axis, and R8 is a radius of curvature of the imaging side surface of the fourth lens at the optical axis.
In the above optical lens, the first lens has negative refractive power, the object side surface is convex near the optical axis and the imaging side surface S2 is concave near the optical axis, which is beneficial to capture the light entering the first lens at a large angle and increase the field of view of the optical lens, and is also beneficial to reduce the spherical aberration and the field curvature of the optical lens. The second lens has negative refractive power, and the imaging side surface is concave near the optical axis, which allows the light beam from the first lens to be deflected gently after passing through the second lens, and effectively prevents too much of the entering light beam from being deflected, so that it is helpful to suppress the occurrence of aberration. The third lens has positive refractive power, the object side surface and the imaging side surface are both convex near the optical axis, which is conducive to further converging the light from the second lens. The fourth lens has positive refractive power, the object side surface is concave near the optical axis and the imaging side surface is convex near the optical axis, which is conducive to converging the light with a large field of view from the third lens. The combination of the fourth lens and the third lens is beneficial to reduce the tolerance sensitivity of the optical lens, so that it is conducive to a more compact structure of the optical lens and enabling miniaturization design of the optical lens. The fifth lens has positive refractive power, the object side surface and the imaging side surface are both convex near the optical axis, which is helpful for correcting edge field aberrations and shortening a total optical length of the optical lens. The sixth lens has negative refractive power and cooperates with the fifth lens having positive refractive power, which help eliminate aberrations and correct astigmatism. The seventh lens has positive refractive power, the object side surface and the imaging side surface are both convex near the optical axis, which helps light to enter the seventh lens gently and reduces edge aberration, and facilitates light entering the image plane at a suitable incident angle to improve the illumination of the optical lens. The sixth lens and the seventh lens are cemented to form the cemented lens, which is beneficial to reduce the chromatic aberration of the optical lens, correct the spherical aberration of the optical lens, and improve the resolution of the optical lens, so that the high-pixel shooting is achieved.

In addition, the optical lens provided by the present application selects an appropriate number of lenses and reasonably configures the refractive power and surface shape of each lens, and at the same time, satisfies the following expression: $165°<FOV<195°$, it is beneficial for the optical lens to have a larger field of view, which is beneficial for the optical lens to obtain more scene content and enrich the imaging information of the optical lens. Further, the optical lens satisfies the following expression: $8<TTL/f<9$, it is beneficial to realize that the optical lens has a large field of view and at the same time control the total optical length of the optical lens within an appropriate range to meet the miniaturization design requirements of the optical lens.

As an optional implementation manner, in the embodiment of the first aspect of the present application, the optical lens satisfies the following expression: $-9.0<R5/R6<0$, $0<R5$, $R6<0$. Wherein, R5 is a radius of curvature of the object side surface of the third lens at the optical axis, and R6 is a radius of curvature of the imaging side surface of the third lens at the optical axis. When the above conditional expression is satisfied, it is beneficial to balance the radius of curvature of the object side surface and the radius of curvature of the imaging side surface of the third lens to control the manufacturing sensitivity of the third lens, thereby improving the imaging quality of the optical lens. Exceeding the upper limit of the above conditional expression, the radius of curvature of the object side surface is too small, which easily causes chromatic aberration of magnification. Below the lower limit of the above conditional expression, the radius of curvature of the object side surface is too large, which easily causes field curvature.

As an optional implementation manner, in the embodiment of the first aspect of the present application, the optical lens satisfies the following expression: $1.0<R7/R8<1.4$, $R7<0$, $R8<0$. Wherein, R7 is a radius of curvature of the object side surface of the fourth lens at the optical axis, and R8 is a radius of curvature of the imaging side surface of the fourth lens at the optical axis. When the above conditional expression is satisfied, it is beneficial to balance the radius of curvature of the object side surface and the radius of curvature of the imaging side surface of the fourth lens to control the manufacturing sensitivity of the fourth lens. Exceeding the upper limit of the above conditional expression, a difference in the radius of curvature between the object side surface and the imaging side surface S8 of the fourth lens is too large, the field curvature and the astigmatism are likely to occur. Below the lower limit of the above conditional expression, the refractive power of the fourth lens is insufficient, which is not conducive to correcting the aberration of the optical lens.

As an optional implementation manner, in the embodiment of the first aspect of the present application, the optical lens satisfies the following expression: $0.3<T3/f<0.7$. Wherein, f is the focal length of the optical lens, and T3 is a thickness of the third len at the optical axis. When the above conditional expression is satisfied, it is beneficial to control the total optical length of the optical lens, thereby realizing the miniaturization design of the optical lens and controlling the coma and the field curvature of the optical lens. Exceeding the upper limit of the above conditional expression, the total optical length of the optical lens is too large, so that it is difficult to realize the miniaturization design of the optical lens. Below the lower limit of the above conditional expression, the refractive power of the optical lens is insufficient, the coma and the field curvature are likely to occur.

As an optional implementation manner, in the embodiment of the first aspect of the present application, the optical lens satisfies the following expression: $0.7<T4/f<1.2$. Wherein, f is the focal length of the optical lens, and T4 is a thickness of the fourth lens at the optical axis. When the above conditional expression is satisfied, it is beneficial to control the total optical length of the optical lens and the aberration of the optical lens. Exceeding the upper limit of the above conditional expression, the total optical length of the optical lens is too large, which is not conducive to the miniaturization design of the optical lens. Below the lower limit of the above conditional expression, the refractive power of the fourth lens is insufficient, the field curvature is easily generated.

As an optional implementation manner, in the embodiment of the first aspect of the present application, the optical lens satisfies the following expression: $1.1<T5/f<1.6$. Wherein, f is the focal length of the optical lens, and T5 is a thickness of the fifth lens at the optical axis. When the above conditional expression is satisfied, it is beneficial to control the total optical length of the optical lens and the aberration of the optical lens. Exceeding the upper limit of the above conditional expression, the total optical length of the optical lens is too large, which is not conducive to the miniaturization design of the optical lens. Below the lower limit of the above conditional expression, the refractive power of the fifth lens is insufficient, the field curvature is easily generated.

As an optional implementation manner, in the embodiment of the first aspect of the present application, the optical lens satisfies the following expression: $0.3<f3/f4<1.5$. Wherein, f3 is a focal length of the third lens, and f4 is a focal length of the fourth lens. When the above conditional expression is satisfied, it is beneficial to control the refractive power of the third lens and the refractive power of the fourth lens within an appropriate range, thereby controlling the coma and the field curvature of the optical lens and reducing the manufacturing sensitivity of the optical lens.

As an optional implementation manner, in the embodiment of the first aspect of the present application, the optical lens satisfies the following expression: $2.2<f567/f<3$. Wherein, f is the focal length of the optical lens, and f567 is a combined focal length of the fifth lens, the sixth lens and the seventh lens. When the above conditional expression is satisfied, it is beneficial to control the total optical length of the optical lens and reduce a refractive power of the fifth lens, the sixth lens and the seventh lens, which is beneficial to control aberration of the optical lens.

As an optional implementation manner, in the embodiment of the first aspect of the present application, the optical lens satisfies the following expression: $|DIS|<5\%$. Wherein, DIS is the maximum value of $f\text{-}\theta$ distortion of the optical lens. When the above conditional expression is satisfied, it can effectively control the $f\text{-}\theta$ distortion of the optical lens and obtain better imaging effects on the basis of using seven lenses to achieve a large field of view, thinness and miniaturization.

As an optional implementation manner, in the embodiment of the first aspect of the present application, the optical lens satisfies the following expression: $-4<f34/f12<-2$. Wherein, f12 is a combined focal length of the first lens and the second lens, and f34 is a combined focal length of the third lens and the fourth lens. When the above conditional expression is satisfied, it is beneficial to control the field curvature, the coma and the chromatic aberration of the optical lens, and is also beneficial to control a back focus of the optical lens. Exceeding the upper limit of the above conditional expression, the optical lens is prone to field curvature. Below the lower limit of the above conditional expression, the optical lens is prone to coma and chromatic aberration of magnification, which is not conducive to the high-quality imaging of the optical lens.

As an optional implementation manner, in the embodiment of the first aspect of the present application, the optical lens satisfies the following expression: $vd3<30$. Wherein, vd3 is an Abbe number of the third lens. When the above conditional expression is satisfied, it is beneficial to correct the chromatic aberration of the optical lens.

As an optional implementation manner, in the embodiment of the first aspect of the present application, the optical lens satisfies the following expression: $vd5>45$. Wherein, vd5 is an Abbe number of the fifth lens. When the above conditional expression is satisfied, it is beneficial to correct the chromatic aberration of the optical lens.

In a second aspect, the present application discloses an image module. The image module includes a photosensitive chip and the above-mentioned optical lens, the photosensitive chip is arranged on the imaging side of the optical lens. The image module with the above-mentioned optical lens can have a larger field of view, better capture more scene content, enrich the imaging information of the optical lens, and at the same time, improve the imaging quality of the optical lens, control the total optical length of the optical lens, thereby achieving a thin, lightweight and miniaturized design of the optical lens.

In a third aspect, the present application discloses an electronic device. The electronic device includes a housing and the above-mentioned image module, the image module is arranged in the housing. The electronic device with the above-mentioned image module can have a larger field of view, better capture more scene content, enrich the imaging information of the optical lens, and at the same time, improve the imaging quality of the optical lens, control the total optical length of the optical lens, thereby achieving a thin, lightweight and miniaturized design of the optical lens.

Compared with the prior art, the beneficial effects of the present application are:

Embodiments of the present application provide an optical lens, an image module and an electronic device. The optical lens adopts seven lenses, and the refractive power and surface shape of each lens are designed, at the same time, the optical lens satisfies the following expressions: $8<TTL/f<9$, and $165°<FOV<195°$, it is beneficial for the optical lens to have a larger field of view, which is beneficial for the optical lens to obtain more scene content and enrich the imaging information of the optical lens, and at the same time, control the aberration of the optical lens, improve the resolution of the optical lens, and improve the imaging quality of the optical lens. In addition, it is beneficial to realize that the optical lens has a large field of view and at the same time control the total optical length of the optical lens within an appropriate range to meet the miniaturization design requirements of the optical lens.

BRIEF DESCRIPTION OF THE DRAWINGS

To better describe and illustrate embodiments and/or examples of those inventions disclosed herein, reference may be made to one or more of the accompanying drawings. The additional details or examples used to describe the drawings should not be construed as limiting the scope of any of the disclosed inventions, the embodiments and/or examples presently described, and the best modes currently understood of these inventions.

FIG. 1 is a schematic structure diagram of an optical lens of a first embodiment of the present application.

FIG. 2 is a longitudinal spherical aberration diagram (mm), astigmatism curve diagram (mm) and distortion diagram (%) of the optical lens of the first embodiment of the present application.

FIG. 3 is a schematic structure diagram of an optical lens of a second embodiment of the present application.

FIG. 4 is a longitudinal spherical aberration diagram (mm), astigmatism curve diagram (mm) and distortion diagram (%) of the optical lens of the second embodiment of the present application.

FIG. 5 is a schematic structure diagram of an optical lens of a third embodiment of the present application.

FIG. 6 is a longitudinal spherical aberration diagram (mm), astigmatism curve diagram (mm) and distortion diagram (%) of the optical lens of the third embodiment of the present application.

FIG. 7 is a schematic structure diagram of an optical lens of a fourth embodiment of the present application.

FIG. 8 is a longitudinal spherical aberration diagram (mm), astigmatism curve diagram (mm) and distortion diagram (%) of the optical lens of the fourth embodiment of the present application.

FIG. 9 is a schematic structure diagram of an optical lens of a fifth embodiment of the present application.

FIG. 10 is a longitudinal spherical aberration diagram (mm), astigmatism curve diagram (mm) and distortion diagram (%) of the optical lens of the fifth embodiment of the present application.

FIG. 11 is a schematic diagram of an image module of an embodiment of the present application.

FIG. 12 is a schematic diagram of an electronic device of an embodiment of the present application.

DETAILED DESCRIPTION

In order to facilitate understanding of the present invention, the present invention will be described more fully below with reference to the relevant drawings. Preferred embodiments of the invention are shown in the accompanying drawings. However, the invention may be embodied in many different forms and is not limited to the embodiments described herein. Rather, these embodiments are provided so that a thorough understanding of the disclosure of the present invention will be provided.

It should be noted that when a component is referred to as being "fixed to" another component, the component can be directly on another component or a middle component may exist therebetween. When a component is considered to be "connected" to another component, the component can be directly connected to another component or a middle component may exist therebetween. The term "inner", "outer", "left", "right" and similar expressions used herein are for illustrative purposes only and do not represent the only implementation manner.

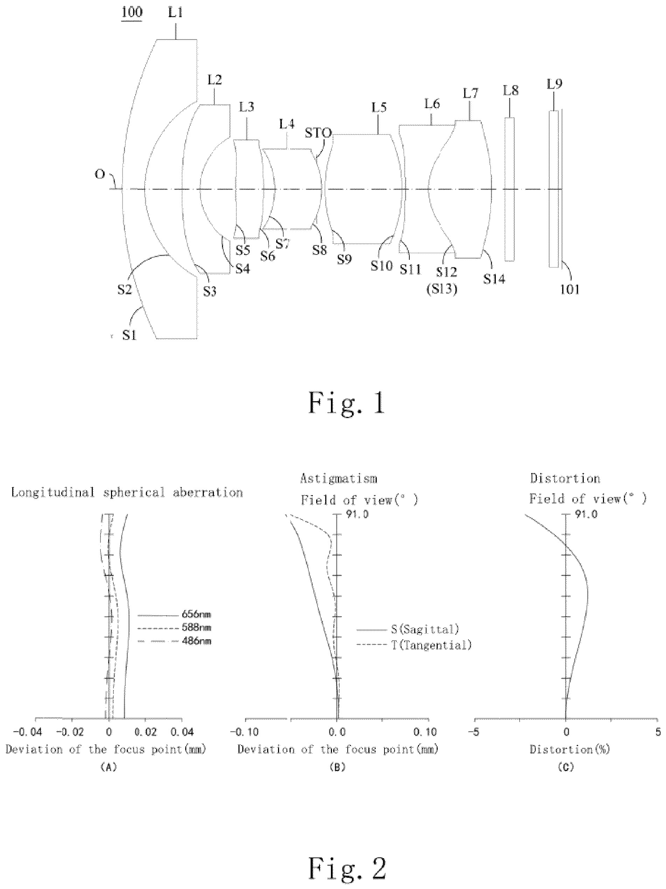

Referring to FIG. 1, in some embodiments of the present application, an optical lens 100 sequentially includes a first lens L1, a second lens L2, a third lens L3, a fourth lens L4, a fifth lens L5, a sixth lens L6 and a seventh lens L7 along an optical axis O from an object side to an imaging side. An imaging side surface S12 of the sixth lens L6 and an object side surface S13 of the seventh lens L7 are cemented to form a cemented lens. During imaging, light enters the first lens L1, the second lens L2, the third lens L3, the fourth lens L4, the fifth lens L5, the sixth lens L6 and the seventh lens L7 in that sequence from the object side of the first lens L1 and finally forms an image on an image plane 101 of the optical lens 100. The first lens L1 has negative refractive power, the second lens L2 has negative refractive power, third lens L3 has positive refractive power, the fourth lens L4 has positive refractive power, the fifth lens L5 has positive refractive power, the sixth lens L6 has negative refractive power, and the seventh lens L7 has positive refractive power.

Further, an object side surface S1 of the first lens L1 is convex near the optical axis O, an imaging side surface S2 of the first lens L1 is concave near the optical axis O, an object side surface S3 of the second lens L2 may be convex or concave near the optical axis O, an imaging side surface S4 of the second lens L2 is concave near the optical axis O, an object side surface S5 of the third lens L3 is convex near the optical axis O, an imaging side surface S6 of the third lens L3 is convex near the optical axis O, an object side surface S7 of the fourth lens L4 is concave near the optical axis O, an imaging side surface S8 of the fourth lens L4 is convex near the optical axis O, an object side surface S9 of the fifth lens L5 is convex near the optical axis O, an imaging side surface S10 of the fifth lens L5 is convex near the optical axis O, an object side surface S11 of the sixth lens L6 may be convex or concave near the optical axis O, an imaging side surface S12 of the sixth lens L6 is concave near the optical axis O, an object side surface S13 of the seventh lens L7 is convex near the optical axis O, an imaging side surface S14 of the seventh lens L7 is convex near the optical axis O.

In the above optical lens 100, the first lens L1 has negative refractive power, the object side surface S1 is convex near the optical axis O and the imaging side surface S2 is concave near the optical axis O, which is beneficial to capture the light entering the first lens L1 at a large angle and increase the field of view of the optical lens 100, and is also beneficial to reduce the spherical aberration and the field curvature of the optical lens 100. The second lens L2 has negative refractive power and the imaging side surface S4 is concave near the optical axis O, which allows the light beam from the first lens L1 to be deflected gently after passing through the second lens L2, and effectively prevents too much of the entering light beam from being deflected, so that it is helpful to suppress the occurrence of aberration. The third lens L3 has positive refractive power, the object side surface S5 and the imaging side surface S6 are both convex near the optical axis O, which is conducive to further converging the light from the second lens L2. The fourth lens L4 has positive refractive power, the object side surface S7 is concave near the optical axis O and the imaging side surface S8 is convex near the optical axis O, which is conducive to converging the light with a large field of view from the third lens L3. The combination of the fourth lens L4 and the third lens L3 is beneficial to reduce the tolerance sensitivity of the optical lens 100, so that it is conducive to a more compact structure of the optical lens 100 and enabling miniaturization design of the optical lens 100. The fifth lens L5 has positive refractive power, the object side surface S9 and the imaging side surface S10 are both convex near the optical axis O, which is helpful for correcting edge field aberrations and shortening a total optical length of the optical lens 100. The sixth lens L6 has positive refractive power and cooperates with the fifth lens L5 having positive refractive power, which help eliminate aberrations and correct astigmatism. The seventh lens L7 has positive refractive power, the object side surface S13 and the imaging side surface S14 are both convex near the optical axis O, which helps light to enter the seventh lens L7 gently and reduces edge aberration, and facilitates light entering the image plane at a suitable incident angle to improve the illumination of the optical lens 100. The sixth lens L6 and the seventh lens L7 are cemented to form the cemented lens, which is beneficial to reduce the chromatic aberration of the optical lens 100, correct the spherical aberration of the optical lens 100, and improve the resolution of the optical lens 100, so that the high-pixel shooting is achieved.

In some embodiments, the optical lens 100 may be applied to electronic devices such as smartphones and smart tablets, at this time, the first lens L1, the second lens L2, the third lens L3, the fourth lens L4, the fifth lens L5, the sixth lens L6, and the seventh lens L7 may be made of plastic, so that the optical lens 100 has good optical effects and at the same time has good portability. In addition, plastic materials can be easier to process, which can reduce the processing cost of optical lens.

In some embodiments, at least one lens of the optical lens 100 may be made of glass, and the lens made of glass can withstand higher or lower temperatures and have excellent optical effects and better stability. In some embodiments, the optical lens 100 may include at least two lenses made of different materials. For example, a design that combines glass lenses and plastic lenses can be used, but the specific configuration relationship between the lensed can be determined according to actual needs, and is not exhaustive here.

In some embodiments, the optical lens 100 may further includes an aperture STO, and the aperture STO which may be an aperture diaphragm or a field diaphragm, and may be disposed between the object side of the optical lens 100 and the object side surface S1 of the first lens L1. It can be understood that in other embodiments, the aperture STO can also be arranged between two adjacent lenses, for example, between the second lens L2 and the third lens L3. The position of the aperture STO is determined according to the actual situation is not specifically limited in this embodiment.

In some embodiments, the optical lens 100 may further include a filter L8, such as an infrared cut-off filter, the infrared cut-off filter is arranged between the imaging side surface S10 of the fifth lens L5 and the image plane 101 of the optical lens 100, thereby filtering out the light in other bands such as infrared light and only allowing visible light to pass through, so that the imaging can be more in line with the visual experience of the human eye. In some embodiments, the filter L8 may be an infrared band pass filter, which allows infrared light within the expected wavelength range to pass through, filters out light at other wavelengths outside the range, so that the light at other wavelengths outside the range cannot pass through the infrared band pass filter, thereby preventing interfering light from affecting the normal imaging of infrared light and improving the quality of dark-light imaging.

In some embodiments, in order to improve imaging quality, the optical lens 100 may further include a protective glass L9. The protective glass L9 may be arranged between the filter L8 and the image plane 101 of the optical lens 100, the protective glass L9 is used to protect the photosensitive chip.

In some embodiments, the optical lens 100 may satisfy the following conditional expression: 165°<FOV<195°. Wherein, FOV is the maximum field of view of the optical lens 100. For example, FOV may be 168°, 175°, 180.4°, 181°, 182°, 183°, 184.6°, or 192°. When the above conditional expression is satisfied, it is beneficial for the optical lens 100 to have a larger field of view, which is beneficial for the optical lens 100 to obtain more scene content and enrich the imaging information of the optical lens 100. In some embodiments, the optical lens 100 may satisfy the following conditional expression: 181°<FOV<182°.

In some embodiments, the optical lens 100 may satisfy the following conditional expression: 8<TTL/f<9. Wherein, TTL is a distance from the object side surface S1 of the first lens L1 to the image plane 101 of the optical lens 100 along the optical axis O (that is, a total length of the optical lens 100), and f is a focal length of the optical lens 100. For example, TTL/f may be 8.216, 8.302, 8.361, 8.574, or 8.892. When the above conditional expression is satisfied, it is beneficial to realize that the optical lens 100 has a large field of view and at the same time control the total optical length of the optical lens 100 within an appropriate range to meet the miniaturization design requirements of the optical lens 100. In some embodiments, he optical lens 100 may satisfy the following conditional expression: 8.27<TTL/f<8.574.

In some embodiments, the optical lens 100 may satisfy the following conditional expression: - 9.0<R5/R6<0, 0<R5, R6<0. Wherein, R5 is a radius of curvature of the object side surface S5 of the third lens L3 at the optical axis O, and R6 is a radius of curvature of the imaging side surface S6 of the third lens L3 at the optical axis O. For example, R5/R6 may be -8.10, -7.25, -6.59, -4.43, -3.10, -1.8 or -0.65. When the above conditional expression is satisfied, it is beneficial to balance the radius of curvature of the object side surface S5 and the radius of curvature of the imaging side surface S6 of the third lens L3 to control the manufacturing sensitivity of the third lens L3, thereby improving the imaging quality of the optical lens 100. Exceeding the upper limit of the above conditional expression, the radius of curvature of the object side surface S5 is too small, which easily causes chromatic aberration of magnification. Below the lower limit of the above conditional expression, the radius of curvature of the object side surface S5 is too large, which easily causes field curvature. Further, the optical lens 100 may satisfy the following conditional expression: $-6.59 \leq R5/R6 \leq -0.65$.

In some embodiments, the optical lens 100 may satisfy the following conditional expression: $1.0 < R7/R8 < 1.4$, $R7 < 0$, $R8 < 0$. Wherein, R7 is a radius of curvature of the object side surface S7 of the fourth lens L4 at the optical axis O, and R8 is a radius of curvature of the imaging side surface S8 of the fourth lens L4 at the optical axis O. For example, R7/R8 may be 1.06, 1.15, 1.22, 1.25, 1.34 or 1.38. When the above conditional expression is satisfied, it is beneficial to balance the radius of curvature of the object side surface S7 and the radius of curvature of the imaging side surface S8 of the fourth lens L4 to control the manufacturing sensitivity of the fourth lens L4. Exceeding the upper limit of the above conditional expression, a difference in the radius of curvature between the object side surface S7 and the imaging side surface S8 of the fourth lens L4 is too large, the field curvature and the astigmatism are likely to occur. Below the lower limit of the above conditional expression, the refractive power of the fourth lens L4 is insufficient, which is not conducive to correcting the aberration of the optical lens 100. Further, the optical lens 100 may satisfy the following conditional expression: $1.06 \leq R7/R8 \leq 1.25$.

In some embodiments, the optical lens 100 may satisfy the following conditional expression: $0.3 < T3/f < 0.7$. Wherein, f is the focal length of the optical lens 100, and T3 is a thickness of the third lens L3 at the optical axis O. For example, T3/f may be 0.46, 0.48, 0.52, 0.58, or 0.61. When the above conditional expression is satisfied, it is beneficial to control the total optical length of the optical lens 100, thereby realizing the miniaturization design of the optical lens 100 and controlling the coma and the field curvature of the optical lens 100. Exceeding the upper limit of the above conditional expression, the total optical length of the optical lens 100 is too large, so that it is difficult to realize the miniaturization design of the optical lens 100. Below the lower limit of the above conditional expression, the refractive power of the optical lens 100 is insufficient, the coma and the field curvature are likely to occur. Further, the optical lens 100 may satisfy the following conditional expression: $0.48 \leq T3/f \leq 0.58$.

In some embodiments, the optical lens 100 may satisfy the following conditional expression: $0.7 < T4/f < 1.2$. Wherein, f is the focal length of the optical lens 100, and T4 is a thickness of the fourth lens L4 at the optical axis O. For example, T4/f may be 0.88, 0.98, 1.02, 1.09 or 1.12. When the above conditional expression is satisfied, it is beneficial to control the total optical length of the optical lens 100 and the aberration of the optical lens 100. Exceeding the upper limit of the above conditional expression, the total optical length of the optical lens 100 is too large, which is not conducive to the miniaturization design of the optical lens 100. Below the lower limit of the above conditional expression, the refractive power of the fourth lens L4 is insufficient, the field curvature is easily generated. Further, the optical lens 100 may satisfy the following conditional expression: $0.88 \leq T4/f \leq 1.02$.

In some embodiments, the optical lens 100 may satisfy the following conditional expression: $1.1 < T5/f < 1.6$. Wherein, f is the focal length of the optical lens 100, and T5 is a thickness of the fifth lens L5 at the optical axis O. For example, T5/f may be 1.16, 1.22, 1.29, 1 43, 1.46, 1.52 or 1.56. When the above conditional expression is satisfied, it is beneficial to control the total optical length of the optical lens 100 and the aberration of the optical lens 100. Exceeding the upper limit of the above conditional expression, the total optical length of the optical lens 100 is too large, which is not conducive to the miniaturization design of the optical lens 100. Below the lower limit of the above conditional expression, the refractive power of the fifth lens L5 is insufficient, the field curvature is easily generated. Further, the optical lens 100 may satisfy the following conditional expression: $1.29 \leq T5/f \leq 1.46$.

In some embodiments, the optical lens 100 may satisfy the following conditional expression: $0.3 < f3/f4 < 1.5$. Wherein, f3 is a focal length of the third lens L3, and f4 is a focal length of the fourth lens L4. For example, f3/f4 may be 0.4, 0.49, 0.64, 0.81, 0.94, 1.19, 1.23 or 1.43. When the above conditional expression is satisfied, it is beneficial to control the refractive power of the third lens L3 and the refractive power of the fourth lens L4 within an appropriate range, thereby controlling the coma and the field curvature of the optical lens 100 and reducing the manufacturing sensitivity of the optical lens 100. Further, the optical lens 100 may satisfy the following conditional expression: $0.49 \leq f3/f4 \leq 1.19$.

In some embodiments, the optical lens 100 may satisfy the following conditional expression: $2.2 < f567/f < 3$. Wherein, f is the focal length of the optical lens 100, and f567 is a combined focal length of the fifth lens L5, the sixth lens L6 and the seventh lens L7. For example, f567/f may be 2.52, 2.54, 2.68, 2.71 or 2.74. When the above conditional expression is satisfied, it is beneficial to control the total optical length of the optical lens 100 and reduce a refractive power of the fifth lens L5, the sixth lens L6 and the seventh lens L7, which is beneficial to control aberration of the optical lens 100. Further, the optical lens 100 may satisfy the following conditional expression: $2.52 \leq f567/f \leq 2.71$.

In some embodiments, the optical lens 100 may satisfy the following conditional expression: IDISI<5%. Wherein, DIS is the maximum value of f-$\theta$ distortion of the optical lens 100. When the above conditional expression is satisfied, it can effectively control the f-$\theta$ distortion of the optical lens 100 and obtain better imaging effects on the basis of using seven lenses to achieve a large field of view, thinness and miniaturization.

In some embodiments, the optical lens 100 may satisfy the following conditional expression: $-4 < f34/f12 < -2$. Wherein, f12 is a combined focal length of the first lens L1 and the second lens L2, and f34 is a combined focal length of the third lens L3 and the fourth lens L4. For example, 34/f12 may be -3.45, -3.17, -2.84, - 2.65, -2.57, or -2.531. When the above conditional expression is satisfied, it is beneficial to control the field curvature, the coma and the chromatic aberration of the optical lens 100, and is also beneficial to control a back focus of the optical lens 100. Exceeding the upper limit of the above conditional expression, the optical lens 100 is prone to field curvature. Below the lower limit of the above conditional expression, the optical lens 100 is prone to coma and chromatic aberration of magnification, which is not conducive to the high-quality imaging of the optical lens 100. Further, the optical lens 100 may satisfy the following conditional expression: -3.17≤f34/f12≤-2.57.

In some embodiments, the optical lens 100 may satisfy the following conditional expression: vd3<30. Wherein, vd3 is an Abbe number of the third lens L3. For example, vd3 may be 18.2, 23.53, 25.28, 27.48, or 28.40. When the above conditional expression is satisfied, it is beneficial to correct the chromatic aberration of the optical lens 100. Further, the optical lens 100 may satisfy the following conditional expression: vd3≤23.53.

In some embodiments, the optical lens 100 may satisfy the following conditional expression: vd5>45. Wherein, vd5 is an Abbe number of the fifth lens L5. For example, vd5 may be 55.33, 60.21, 60.73, 65.46, 67.00, or 68.31. When the above conditional expression is satisfied, it is beneficial to correct the chromatic aberration of the optical lens 100. Further, the optical lens 100 may satisfy the following conditional expression: 60.21≤vd5.

The optical lens 100 of the present disclosure will be described in detail below with reference to specific parameters.

First embodiment

FIG. 1 is a schematic structural diagram of the optical lens 100 of the first embodiment, the optical lens 100 sequentially includes a first lens L1, a second lens L2, a third lens L3, a fourth lens L4, an aperture STO, a fifth lens L5, a sixth lens L6, a seventh lens L7, a filter L8, and a protective glass L9 along an optical axis O from an object side to an imaging side. The materials of the first lens L1, the second lens L2, the third lens L3, the fourth lens L4, the fifth lens L5, the sixth lens L6 and the seventh lens L7 can be found in Table 1.

Further, the first lens L1 has negative refractive power, the second lens L2 has negative refractive power, third lens L3 has positive refractive power, the fourth lens L4 has positive refractive power, the fifth lens L5 has positive refractive power, the sixth lens L6 has negative refractive power, and the seventh lens L7 has positive refractive power.

Furthermore, an object side surface S1 of the first lens L1 is convex near the optical axis O, an imaging side surface S2 of the first lens L1 is concave near the optical axis O, an object side surface S3 of the second lens L2 is convex near the optical axis O, an imaging side surface S4 of the second lens L2 is concave near the optical axis O, an object side surface S5 and an imaging side surface S6 of the third lens L3 are respectively convex near the optical axis O, an object side surface S7 of the fourth lens L4 is concave near the optical axis O, an imaging side surface S8 of the fourth lens L4 is convex near the optical axis O, an object side surface S9 and an imaging side surface S10 of the fifth lens L5 are respectively convex near the optical axis O, an object side surface S11 and an imaging side surface S12 of the sixth lens L6 are respectively concave near the optical axis O, an object side surface S13 and an imaging side surface S14 of the seventh lens L7 are convex near the optical axis O.

Taking a focal length f=2.373mm of the optical lens 100, the maximum field of view FOV=182°, a total optical length TTL=19.700mm, and an aperture number FNO=2.0 as an example, other parameters of the optical lens 100 are given in Table 1 and Table 2. Wherein, the elements from the object surface to the imaging surface along the optical axis O of the optical lens 100 are arranged in sequence according to the order of the elements from top to bottom in Table 1. In the same lens, a surface with a smaller surface number is the object side surface, a surface with a larger surface number is the imaging side surface, for example, the surface number S1 and the surface number S2 are the object side surface S1 and the imaging side surface S2 of the first lens L1. The Y radius in Table 1 is the curvature radius of the object side surface or the imaging side surface of the corresponding surface number at the optical axis O. The first value in the "Thickness" parameter column of a lens is the thickness of the lens at the optical axis O, and the second value is a distance from the imaging side surface of the lens to a rear surface in an imaging side direction on the optical axis O. The value of the aperture STO in the "Thickness" parameter column is a distance from the aperture STO to a vertex of a latter surface in an imaging side direction (the vertex refers to an intersection of the latter surface and the optical axis O) on the optical axis O, and by default, a direction from the object side surface of the first lens L1 to the imaging side surface of the last lens is a positive direction of the optical axis O. When the value of the aperture STO in the "Thickness" parameter column is negative, it means that the aperture STO is arranged on the imaging side of the vertex of the latter surface. When the value of the aperture STO in the "Thickness" parameter column is a positive value, the aperture STO is arranged on the object side of the vertex of the latter surface. It can be understood that the units of the Y radius, the thickness, and the focal length in Table 1 are all mm, the reference wavelength for the refractive index and Abbe number of each lens in Table 1 is 587.6nm, and the reference wavelength for the focal length of each lens in Table 1 is 588nm.

Table 1

| First embodiment | | | | | | | | |
|---|---|---|---|---|---|---|---|---|
| f=2.373mm, FNO=2.0, FOV=182°, TTL=19.700mm | | | | | | | | |
| Surface number | Surface name | Surface type | Y radius | Thickness | Material | Refractive index | Abbe number | Focal length |
| | Object side | sphere | infinity | infinity | | | | |
| 1 | First lens | sphere | 15.609 | 1.000 | glass | 1.755 | 52.322 | -8.888 |
| 2 | | sphere | 4.564 | 1.675 | | | | |
| 3 | Second lens | asphere | 19.257 | 0.800 | plastic | 1.536 | 55.981 | -5.940 |
| 4 | | asphere | 2.695 | 1.633 | | | | |
| 5 | Third lens | asphere | 15.351 | 1.241 | plastic | 1.640 | 23.529 | 14.711 |
| 6 | | asphere | -23.502 | 0.493 | | | | |
| 7 | Fourth lens | asphere | -3.687 | 2.090 | plastic | 1.536 | 55.981 | 18.089 |
| 8 | | asphere | -3.201 | -0.226 | | | | |
| 9 | Aperture | sphere | infinity | 0.376 | | | | |
| 10 | Fifth lens | sphere | 6.002 | 3.472 | glass | 1.618 | 63.406 | 5.459 |
| 11 | | sphere | -6.002 | 0.150 | | | | |
| 12 | Sixth lens | asphere | -32.394 | 1.018 | plastic | 1.640 | 23.529 | -3.869 |
| 13 | Seventh lens | asphere | 2.710 | 2.877 | plastic | 1.536 | 55.981 | 4.225 |
| 14 | | asphere | -8.723 | 0.602 | | | | |
| 15 | Filter | sphere | infinity | 0.400 | glass | 1.517 | 64.199 | |
| 16 | | sphere | infinity | 1.550 | | | | |
| 17 | Protective glass | sphere | infinity | 0.400 | glass | 1.517 | 64.199 | |
| 18 | | sphere | infinity | 0.150 | | | | |
| | Imaging surface | sphere | infinity | | | | | |

In the first embodiment, the object side surfaces and the imaging side surfaces of the second lens L2 to the fourth lens L4, the sixth lens L6, and the seventh lens L7 are both aspherical. The surface shape x of each aspherical lens can be defined by, but not limited to, the following aspherical formula:

$$x = \frac{ch^2}{1 + \sqrt{1 - (k+1)\ c^2 h^2}} + \sum Aih^i$$

Wherein, x is a height distance along the optical axis from a position of the aspheric surface at height h to the vertex of the aspheric surface; c is a curvature of the vertex of the aspheric surface, and c=1/R (that is, the curvature of the vertex of the aspheric surface c is the reciprocal of the Y radius R in the above Table 1); k is the cone coefficient; Ai is the coefficient corresponding to the i-th higher-order term of the aspheric surface. Table 2 shows the higher-order term coefficients A4, A6, A8, A10, A12, A14, A16, A18, and A20 that can be used for each aspherical lens in the first embodiment.

Table 2

| First embodiment | | | | |
|---|---|---|---|---|
| Aspheric coefficient | | | | |
| Surface number | K | A4 | A6 | A8 | A10 |
| 3 | 0.0000E+00 | 1.5622E-03 | 1.4099E-04 | -1.4509E-05 | 4.2572E-07 |
| 4 | -6.4074E-01 | 1.9454E-03 | 4.8377E-04 | 1.6523E-04 | 1.4710E-05 |
| 5 | 0.0000E+00 | -1.0154E-02 | -9.6890E-04 | 6.4088E-04 | -9.5078E-05 |
| 6 | 0.0000E+00 | -1.0571E-02 | 9.2392E-04 | 1.5283E-04 | -4.7855E-05 |
| 7 | 0.0000E+00 | -5.3614E-03 | 1.4245E-03 | -6.1092E-04 | 1.9970E-06 |
| 8 | 0.0000E+00 | 1.7688E-03 | 2.4629E-04 | -1.9545E-04 | 4.0492E-05 |
| 12 | 0.0000E+00 | -1.3477E-03 | -7.0001E-04 | 3.2053E-05 | 1.1894E-05 |
| 13 | -5.0505E-01 | 1.1196E-02 | -5.1305E-03 | 8.3389E-04 | -5.9927E-05 |
| 14 | 0.0000E+00 | 1.0743E-03 | -3.0047E-04 | 9.5977E-05 | -1.6586E-05 |
| Surface number | A12 | A14 | A16 | A18 | A20 |
| 3 | -2.0504E-08 | 3.2828E-09 | -1.1915E-10 | 0.0000E+00 | 0.0000E+00 |
| 4 | -1.2734E-05 | 2.8646E-06 | -2.4031E-07 | 0.0000E+00 | 0.0000E+00 |
| 5 | -3.1135E-05 | 1.0081E-05 | -7.6489E-07 | 0.0000E+00 | 0.0000E+00 |
| 6 | -6.6729E-05 | 2.8345E-05 | -3.1895E-06 | 0.0000E+00 | 0.0000E+00 |
| 7 | 3.8581E-05 | -8.0221E-06 | 2.9060E-07 | 0.0000E+00 | 0.0000E+00 |
| 8 | 1.8637E-05 | -9.8913E-06 | 1.2693E-06 | 0.0000E+00 | 0.0000E+00 |
| 12 | -5.7945E-06 | 8.5765E-07 | -4.0755E-08 | 0.0000E+00 | 0.0000E+00 |
| 13 | -1.1546E-05 | 2.1696E-06 | -9.4800E-08 | 0.0000E+00 | 0.0000E+00 |
| 14 | 6.6914E-07 | 1.4527E-07 | -1.1568E-08 | 0.0000E+00 | 0.0000E+00 |

Referring to (A) of FIG. 2, (A) of FIG. 2 shows a longitudinal spherical aberration diagram of the optical lens 100 in the first embodiment at wavelengths of 486 nm, 588 nm, and 656 nm. In (A) of FIG. 2, the abscissa along the X-axis direction represents the deviation of the focus point in mm, and the ordinate along the Y-axis direction represents the normalized field of view. It can be seen from (A) in Figure 2 that the spherical aberration value of the optical lens 100 in the first embodiment is well, indicating that the imaging quality of the optical lens 100 in this embodiment is well.

Referring to (B) of FIG. 2, (B) of FIG. 2 is an astigmatism curve diagram of the optical lens 100 in the first embodiment at a wavelength of 588 nm. Wherein, the abscissa along the X-axis direction represents the deviation of the focus point in mm, and ordinate along the Y-axis direction represents the field of view angle in °. T in the astigmatism curve diagram represents the curvature of the image plane 101 in the tangential direction, and S represents the curvature of the image plane 101 in the sagittal direction. It can be seen from (B) of FIG. 2 that at this wavelength, astigmatism of the optical lens 100 is well compensated.

Referring to (C) of FIG. 2, (C) of FIG. 2 is a distortion diagram of the optical lens 100 in the first embodiment at a wavelength of 588 nm. Wherein, the abscissa along the X-axis direction represents the distortion in %, and the ordinate along the Y-axis direction represents the field of view in °. It can be seen from (C) of FIG. 2 that at a wavelength of 588 nm, the distortion of the optical lens 100 is well corrected.

Second embodiment

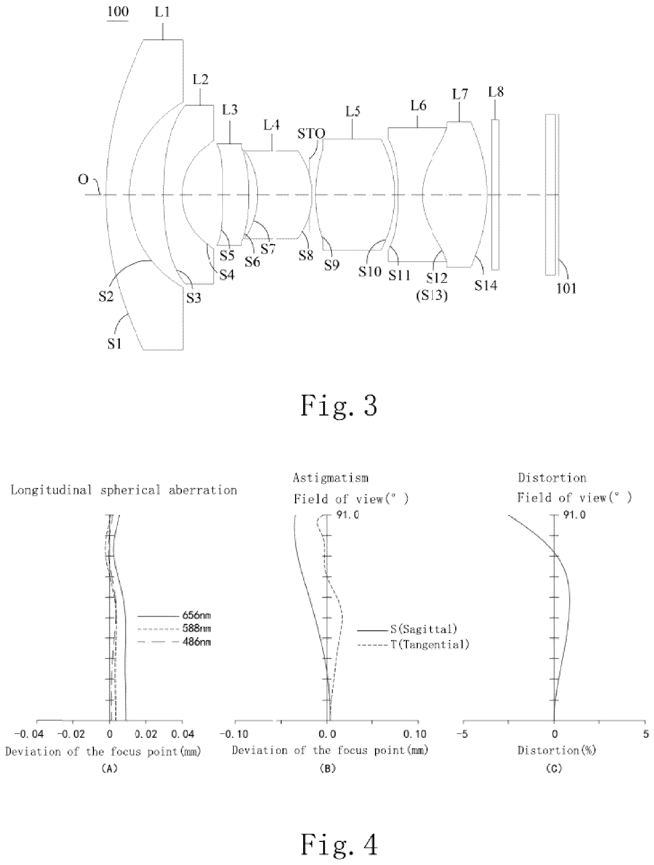

Referring to FIG. 3, FIG. 3 is a schematic structural diagram of the optical lens 100 of the second embodiment. The optical lens 100 sequentially includes a first lens L1, a second lens L2, a third lens L3, a fourth lens L4, an aperture STO, a fifth lens L5, a sixth lens L6, a seventh lens L7, a filter L8, and a protective glass L9 along an optical axis O from an object side to an imaging side. The materials of the first lens L1, the second lens L2, the third lens L3, the fourth lens L4, the fifth lens L5, the sixth lens L6 and the seventh lens L7 can be found in Table 3.

Further, the refractive power of each lens in the second embodiment is consistent with the refractive power of each lens in the in the first embodiment, and a surface shape of each lens in the second embodiment is consistent with a surface shape of each lens in the first embodiment.

Taking a focal length f=2.382mm of the optical lens 100, the maximum field of view FOV=182° of the optical lens 100, a total optical length TTL=19.745mm of the optical lens 100, and an aperture number FNO=2.2 as an example, and other parameters of the optical lens 100 are given in Table 3 and Table 4. Wherein, the definition of each parameter can be obtained from the description of the foregoing embodiment and will not be described again here. It can be understood that the units of Y radius, thickness, and focal length in Table 3 are all mm, the reference wavelength for the refractive index and Abbe number of each lens in Table 3 is 587.6nm, and the reference wavelength for the focal length of each lens in Table 3 is 588nm.

Table 3

| Second embodiment | | | | | | | | |
|---|---|---|---|---|---|---|---|---|
| f=2.382mm, FNO=2.0, FOV=182°, TTL=19.745mm | | | | | | | | |
| Surface number | Surface name | Surface type | Y radius | Thickness | Material | Refractive index | Abbe number | Focal length |
| | Object side | sphere | infinity | infinity | | | | |
| 1 | First lens | sphere | 14.727 | 1.000 | glass | 1.773 | 49.599 | -9.164 |
| 2 | | sphere | 4.640 | 1.514 | | | | |
| 3 | Second lens | asphere | 14.973 | 0.800 | plastic | 1.536 | 55.981 | -6.043 |
| 4 | | asphere | 2.615 | 1.797 | | | | |
| 5 | Third lens | asphere | 68.982 | 1.143 | plastic | 1.640 | 23.529 | 14.306 |
| 6 | | asphere | -10.473 | 0.384 | | | | |
| 7 | Fourth lens | asphere | -3.807 | 2.352 | plastic | 1.536 | 55.981 | 14.917 |
| 8 | | asphere | -3.137 | -0.107 | | | | |
| 9 | Aperture | sphere | infinity | 0.257 | | | | |
| 10 | Fifth lens | sphere | 6.227 | 3.466 | glass | 1.593 | 67.002 | 5.385 |
| 11 | | sphere | -5.205 | 0.150 | | | | |
| 12 | Sixth lens | asphere | -10.976 | 1.041 | plastic | 1.640 | 23.529 | -3.759 |
| 13 | Seventh lens | asphere | 3.190 | 2.853 | plastic | 1.536 | 55.981 | 4.513 |
| 14 | | asphere | -6.909 | 0.200 | | | | |
| 15 | Filter | sphere | infinity | 0.300 | glass | 1.517 | 64.199 | |
| 16 | | sphere | infinity | 2.044 | | | | |
| 17 | Protective glass | sphere | infinity | 0.400 | glass | 1.517 | 64.199 | |
| 18 | | sphere | infinity | 0.150 | | | | |
| | Imaging surface | sphere | infinity | | | | | |

In the second embodiment, Table 4 shows the higher-order term coefficients that can be used for each aspherical lens in the second embodiment, wherein, each aspherical surface shape can be defined by the formula given in the first embodiment.

Table 4

| Second embodiment | | | | |
| --- | --- | --- | --- | --- |
| Aspheric coefficient | | | | |
| Surface number | K | A4 | A6 | A8 | A10 |
| 3 | 5.4530E+00 | 7.6090E-04 | 1.4692E-04 | -1.2443E-05 | 5.2597E-07 |
| 4 | -5.4559E-01 | 1.4737E-03 | 5.5876E-04 | 1. 847E-04 | 8.3069E-06 |
| 5 | 0.0000E+00 | -1.0491E-02 | -8.6078E-04 | 6. 355E-04 | -1.2019E-04 |
| 6 | 1.6368E+01 | -6.7302E-03 | 1.3411E-03 | 1. 400E-04 | -7.7006E-05 |
| 7 | 1.6418E+00 | 2.5526E-04 | 2.0058E-03 | -6.1649E-04 | -6.7171E-05 |
| 8 | 5.8187E-01 | 4.1448E-03 | 6.4953E-04 | -1.9267E-04 | 3.0870E-05 |
| 12 | -1.5722E+01 | -2.9181E-03 | -6.0986E-04 | -1.7222E-05 | 1.8175E-05 |
| 13 | -3.4098E-01 | 1.3909E-02 | -5.1920E-03 | 5. 810E-04 | -7.5871E-06 |
| 14 | -1.3526E+01 | -4.2156E-03 | 2.6814E-04 | 1. 799E-05 | -4.0564E-06 |
| Surface number | A12 | A14 | A16 | A18 | A20 |
| 3 | -2.7783E-08 | 1.9657E-09 | -3.9386E-11 | 0.0000E+00 | 0.0000E+00 |
| 4 | -1.0346E-05 | 3.1708E-06 | -3.0623E-07 | 0.0000E+00 | 0.0000E+00 |
| 5 | -2.9451E-05 | 1.1704E-05 | -9.7508E-07 | 0.0000E+00 | 0.0000E+00 |
| 6 | -6.3130E-05 | 2.9799E-05 | -3.3817E-06 | 0.0000E+00 | 0.0000E+00 |
| 7 | 7.2298E-05 | -1.4527E-05 | 9.5252E-07 | 0.0000E+00 | 0.0000E+00 |
| 8 | 2.8067E-05 | -1.1000E-05 | 1.2873E-06 | 0.0000E+00 | 0.0000E+00 |
| 12 | -4.5923E-06 | 6.0978E-07 | -3.1194E-08 | 0.0000E+00 | 0.0000E+00 |
| 13 | -5.5908E-06 | 5.4548E-07 | -1.1310E-08 | 0.0000E+00 | 0.0000E+00 |
| 14 | -4.2778E-09 | 7.4379E-08 | -5.1246E-09 | 0.0000E+00 | 0.0000E+00 |

Referring to FIG. 4, it can be seen from (A) a longitudinal spherical aberration diagram, (B) an astigmatism curve diagram, and (C) a distortion diagram in FIG. 4 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 4, (B) in Figure 4, and (C) in Figure 4, please refer to the contents described in (A) in Figure 2, (B) in Figure 2, and (C) in Figure 2 in the first embodiment and will not be described again here.

Third embodiment

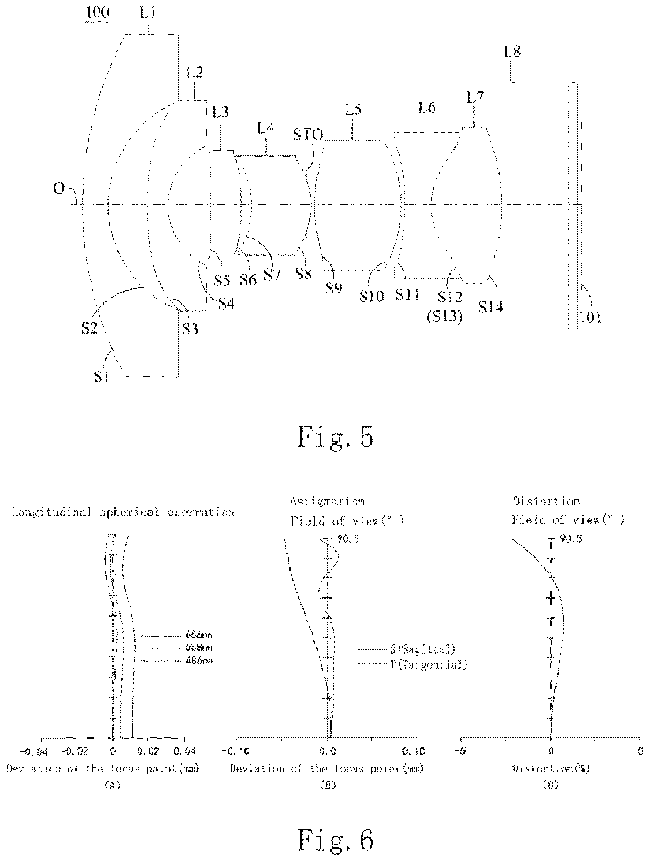

Referring to FIG. 5, FIG. 5 is a schematic structural diagram of the optical lens 100 of the third embodiment. The optical lens 100 sequentially includes a first lens L1, a second lens L2, a third lens L3, a fourth lens L4, an aperture STO, a fifth lens L5, a sixth lens L6, a seventh lens L7, a filter L8, and a protective glass L9 along an optical axis O from an object side to an imaging side. The materials of the first lens L1, the second lens L2, the third lens L3, the fourth lens L4, the fifth lens L5, the sixth lens L6 and the seventh lens L7 can be found in Table 5.

Further, the refractive power of each lens in the third embodiment is consistent with the refractive power of each lens in the in the first embodiment, and a surface shape of each lens in the third embodiment is consistent with the surface shape of each lens in the first embodiment.

Taking a focal length f=2.385mm of the optical lens 100, the maximum field of view FOV=181° of the optical lens 100, a total optical length TTL=19.724mm of the optical lens 100, and an aperture number FNO=2.0 as an example, and other parameters of the optical lens 100 are given in Table 5 and Table 6. Wherein, the definition of each parameter can be obtained from the description of the foregoing embodiments and will not be described again here. It can be understood that the units of Y radius, thickness, and focal length in Table 5 are all mm, the reference wavelength for the refractive index and Abbe number of each lens in Table 5 is 587.6nm, and the reference wavelength for the focal length of each lens in Table 5 is 588nm.

Table 5

| Third embodiment | | | | | | | | |
|---|---|---|---|---|---|---|---|---|
| f=2.385mm, FNO=2.0, FOV=181°, TTL=19.724mm | | | | | | | | |
| Surface number | Surface name | Surface type | Y radius | Thickness | Material | Refractive index | Abbe number | Focal length |
|  | Object side | sphere | infinity | infinity |  |  |  |  |
| 1 | First lens | sphere | 15.127 | 1.000 | glass | 1.773 | 49.599 | -8.918 |
| 2 |  | sphere | 4.597 | 1.580 |  |  |  |  |
| 3 | Second lens | asphere | 15.443 | 0.800 | plastic | 1.536 | 55.981 | -6.102 |
| 4 |  | asphere | 2.652 | 1.726 |  |  |  |  |
| 5 | Third lens | asphere | 24.076 | 1.190 | plastic | 1.640 | 23.529 | 13.638 |
| 6 |  | asphere | -13.401 | 0.416 |  |  |  |  |
| 7 | Fourth lens | asphere | -3.969 | 2.328 | plastic | 1.536 | 55.981 | 14.461 |
| 8 |  | asphere | -3.163 | -0.166 |  |  |  |  |
| 9 | Aperture | sphere | infinity | 0.316 |  |  |  |  |
| 10 | Fifth lens | sphere | 7.181 | 3.408 | glass | 1.640 | 60.214 | 5.408 |
| 11 |  | sphere | -5.445 | 0.150 |  |  |  |  |
| 12 | Sixth lens | asphere | -12.967 | 1.039 | plastic | 1.640 | 23.529 | -3.660 |
| 13 | Seventh lens | asphere | 2.943 | 2.773 | plastic | 1.536 | 55.981 | 4.347 |
| 14 |  | asphere | -7.544 | 0.200 |  |  |  |  |
| 15 | Filter | sphere | infinity | 0.300 | glass | 1.517 | 64.199 |  |
| 16 |  | sphere | infinity | 2 115 |  |  |  |  |
| 17 | Protective glass | sphere | infinity | 0.400 | glass | 1.517 | 64.199 |  |
| 18 |  | sphere | infinity | 0.150 |  |  |  |  |
|  | Imaging surface | sphere | infinity |  |  |  |  |  |

In the third embodiment, Table 6 shows the higher-order term coefficients that can be used for each aspherical lens in the third embodiment, wherein, each aspherical surface shape can be defined by the formula given in the first embodiment.

Table 6

| Third embodiment Aspheric coefficient | | | | | |
|---|---|---|---|---|---|
| Surface number | K | A4 | A6 | A8 | A10 |
| 3 | 5.7101E+00 | 7.4282E-04 | 1.4928E-04 | -1.2513E-05 | 5.0884E-07 |
| 4 | -5.8165E-01 | 1.7063E-03 | 3.4571E-04 | 1. 932E-04 | 1.1596E-05 |
| 5 | 0.0000E+00 | -9.7108E-03 | -8.7142E-04 | 6. 822E-04 | -1.0584E-04 |
| 6 | 2.2875E+01 | -7.7751E-03 | 1.3267E-03 | 1. 578E-04 | -7.6196E-05 |
| 7 | 1.7799E+00 | -1.5215E-03 | 2.0741E-03 | -5.8446E-04 | -7.4531E-05 |
| 8 | 5.8091E-01 | 4.2546E-03 | 5.8289E-04 | -1.7998E-04 | 3.3188E-05 |
| 12 | -2.8560E+01 | -2.4176E-03 | -5.6909E-04 | -1.2633E-05 | 2.0292E-05 |
| 13 | -4.3611E-01 | 1.3244E-02 | -5.0263E-03 | 6. 648E-04 | -2.9916E-05 |

(continued)

| Third embodiment Aspheric coefficient | | | | |
|---|---|---|---|---|
| Surface number | K | A4 | A6 | A8 | A10 |
| 14 | -1.5460E+01 | -3.7058E-03 | 2.7747E-04 | 4. 732E-06 | -4.8501E-06 |
| Surface number | A12 | A14 | A16 | A18 | A20 |
| 3 | -2.6972E-08 | 2.1199E-09 | -5.1561E-11 | 0.0000E+00 | 0.0000E+00 |
| 4 | -1.1272E-05 | 3.0185E-06 | -2.6927E-07 | 0.0000E+00 | 0.0000E+00 |
| 5 | -3.0461E-05 | 1.0673E-05 | -8.4235E-07 | 0.0000E+00 | 0.0000E+00 |
| 6 | -6.3491E-05 | 2.9092E-05 | -3.2284E-06 | 0.0000E+00 | 0.0000E+00 |
| 7 | 7.4527E-05 | -1.4775E-05 | 9.7992E-07 | 0.0000E+00 | 0.0000E+00 |
| 8 | 2.7047E-05 | -1.1218E-05 | 1.3518E-06 | 0.0000E+00 | 0.0000E+00 |
| 12 | -5.0445E-06 | 4.4268E-07 | -1.3213E-09 | 0.0000E+00 | 0.0000E+00 |
| 13 | -7.2473E-06 | 1.0494E-06 | -3.1862E-08 | 0.0000E+00 | 0.0000E+00 |
| 14 | 1.2013E-07 | 1.1487E-07 | -9.0842E-09 | 0.0000E+00 | 0.0000E+00 |

Referring to FIG. 6, it can be seen from (A) a longitudinal spherical aberration diagram, (B) an astigmatism curve diagram, and (C) a distortion diagram in FIG. 6 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 6, (B) in Figure 6, and (C in Figure 6, please refer to the contents described in (A) in Figure 2, (B) in Figure 2, and (C) in Figure 2 in the first embodiment and will not be described again here.

Fourth embodiment

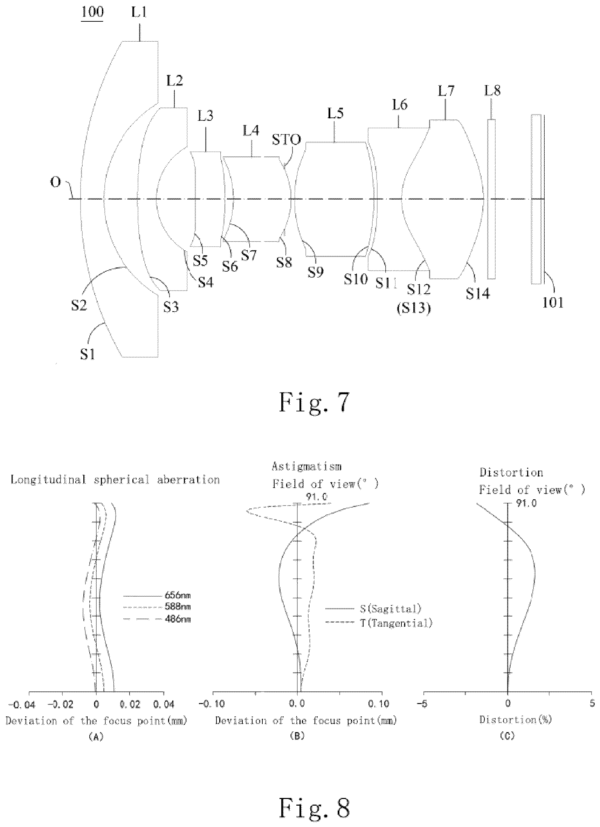

Referring to FIG. 7, FIG. 7 is a schematic structural diagram of the optical lens 100 of the fourth embodiment. The optical lens 100 sequentially includes a first lens L1, a second lens L2, a third lens L3, a fourth lens L4, an aperture STO, a fifth lens L5, a sixth lens L6, a seventh lens L7, a filter L8, and a protective glass L9 along an optical axis O from an object side to an imaging side. The materials of the first lens L1, the second lens L2, the third lens L3, the fourth lens L4, the fifth lens L5, the sixth lens L6 and the seventh lens L7 can be found in Table 7.

Further, the refractive power of each lens in the fourth embodiment is consistent with the refractive power of each lens in the in the first embodiment, and a surface shape of each lens in the fourth embodiment is consistent with the surface shape of each lens in the first embodiment.

Taking a focal length f=2.359mm of the optical lens 100, the maximum field of view FOV=182° of the optical lens 100, a total optical length TTL=19.723mm of the optical lens 100, and an aperture number FNO=2.0 as an example, and other parameters of the optical lens 100 are given in Table 7 and Table 8. Wherein, the definition of each parameter can be obtained from the description of the foregoing embodiments and will not be described again here. It can be understood that the units of Y radius, thickness, and focal length in Table 7 are all mm, the reference wavelength for the refractive index and Abbe number of each lens in Table 7 is 587.6nm, and the reference wavelength for the focal length of each lens in Table 7 is 588nm.

Table 7

| Fourth embodiment | | | | | | | | |
|---|---|---|---|---|---|---|---|---|
| f=2.359mm, FNO=2.0, FOV=182°, TTL=19.723mm | | | | | | | | |
| Surface number | Surface name | Surface type | Y radius | Thickness | Material | Refractive index | Abbe number | Focal length |
| | Object side | sphere | infinity | infinity | | | | |
| 1 | First lens | sphere | 13.699 | 1.000 | glass | 1.773 | 49.599 | -10.043 |
| 2 | | sphere | 4.795 | 1.438 | | | | |

(continued)

| Surface number | Surface name | Surface type | Y radius | Thickness | Material | Refractive index | Abbe number | Focal length |
|---|---|---|---|---|---|---|---|---|
| | | | | Fourth embodiment | | | | |
| | | | f=2.359mm, FNO=2.0, FOV=182°, TTL=19.723mm | | | | | |
| 3 | Second lens | asphere | 15.168 | 0.800 | plastic | 1.536 | 55.981 | -5.913 |
| 4 | | asphere | 2.577 | 1.692 | | | | |
| 5 | **Third** lens | asphere | 41.953 | 1.255 | plastic | 1.640 | 23.529 | 16.141 |
| 6 | | asphere | -13.537 | 0.357 | | | | |
| 7 | Fourth lens | asphere | -3.653 | 2.418 | plastic | 1.536 | 55.981 | 13.515 |
| 8 | | asphere | -2.992 | -0.274 | | | | |
| 9 | Aperture | sphere | infinity | 0.424 | | | | |
| 10 | Fifth lens | sphere | 5.054 | 3.373 | glass | 1.603 | 65.460 | 5.850 |
| 11 | | sphere | -8.746 | 0.150 | | | | |
| 12 | Sixth lens | asphere | -11.958 | 1.074 | plastic | 1.640 | 23.529 | -3.491 |
| 13 | Seventh lens | asphere | 2.842 | 3.434 | plastic | 1.536 | 55.981 | 3.836 |
| 14 | | asphere | -4.322 | 0.200 | | | | |
| 15 | Filter | sphere | infinity | 0.300 | glass | 1.517 | 64.199 | |
| 16 | | sphere | infinity | 1.533 | | | | |
| 17 | Protective glass | sphere | infinity | 0.400 | glass | 1.517 | 64.199 | |
| 18 | | sphere | infinity | 0.150 | | | | |
| | Imaging surface | sphere | infinity | | | | | |

In the fourth embodiment, Table 8 shows the higher-order term coefficients that can be used for each aspherical lens in the fourth embodiment, wherein, each aspherical surface shape can be defined by the formula given in the first embodiment.

Table 8

| Surface number | K | A4 | A6 | A8 | A10 |
|---|---|---|---|---|---|
| | | | Fourth embodiment | | |
| | | | Aspheric coefficient | | |
| 3 | 1.7641E+00 | 1.5238E-04 | 1.9424E-04 | -1.0694E-05 | 3.4201E-07 |
| 4 | -5.5414E-01 | 2.8417E-03 | -9.0765E-05 | 2. 437E-04 | 2.6177E-05 |
| 5 | 0.0000E+00 | -1.1183E-02 | -1.9810E-03 | 5. 885E-04 | -1.3708E-04 |
| 6 | 2.0328E+01 | -7.0457E-03 | -9.3284E-05 | -2.8307E-05 | -7.9241E-06 |
| 7 | 6.3659E-01 | 3.7195E-03 | -9.9848E-05 | -5.2206E-06 | -8.2550E-05 |
| 8 | 3.7762E-01 | 4.3903E-03 | 7.5513E-04 | -1.6713E-04 | 2.0330E-05 |
| 12 | -1.8851E+01 | -1.7603E-03 | -7.0673E-04 | -8.7252E-05 | 4.1794E-05 |
| 13 | -8.8792E-01 | 1.4677E-02 | -7.1568E-03 | 9. 703E-04 | -2.6232E-05 |
| 14 | -4.3574E+00 | -2.1856E-03 | 2.9056E-04 | -4.9185E-06 | -2.5695E-07 |
| Surface number | A12 | A14 | A16 | A18 | A20 |
| 3 | -3.0474E-08 | 2.9685E-09 | -5.4826E-11 | 0.0000E+00 | 0.0000E+00 |

(continued)

| Surface number | A12 | A14 | A16 | A18 | A20 |
|---|---|---|---|---|---|
| 4 | -1.3791E-05 | 2.4443E-06 | -1.6257E-07 | 0.0000E+00 | 0.0000E+00 |
| 5 | -3.2572E-05 | 1.5941E-05 | -1.3397E-06 | 0.0000E+00 | 0.0000E+00 |
| 6 | -1.0548E-05 | 1.4707E-05 | -2.4404E-07 | 0.0000E+00 | 0.0000E+00 |
| 7 | 5.6060E-05 | 3.5112E-06 | -1.0888E-06 | 0.0000E+00 | 0.0000E+00 |
| 8 | 1.8732E-05 | -5.6953E-06 | 4.5092E-07 | 0.0000E+00 | 0.0000E+00 |
| 12 | -2.8186E-07 | -1.3205E-06 | 1.1428E-07 | 0.0000E+00 | 0.0000E+00 |
| 13 | -5.7854E-06 | 5.8677E-07 | -1.4984E-08 | 0.0000E+00 | 0.0000E+00 |
| 14 | 1.7563E-07 | -3.1828E-08 | 1.0610E-09 | 0.0000E+00 | 0.0000E+00 |

Referring to FIG. 8, it can be seen from (A) a longitudinal spherical aberration diagram, (B) an astigmatism curve diagram, and (C) a distortion diagram in FIG. 8 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 8, (B) in Figure 8, and (C) in Figure 8, please refer to the contents described in (A) in Figure 2, (B) in Figure 2, and (C) in Figure 2 in the first embodiment and will not be described again here.

Fifth embodiment

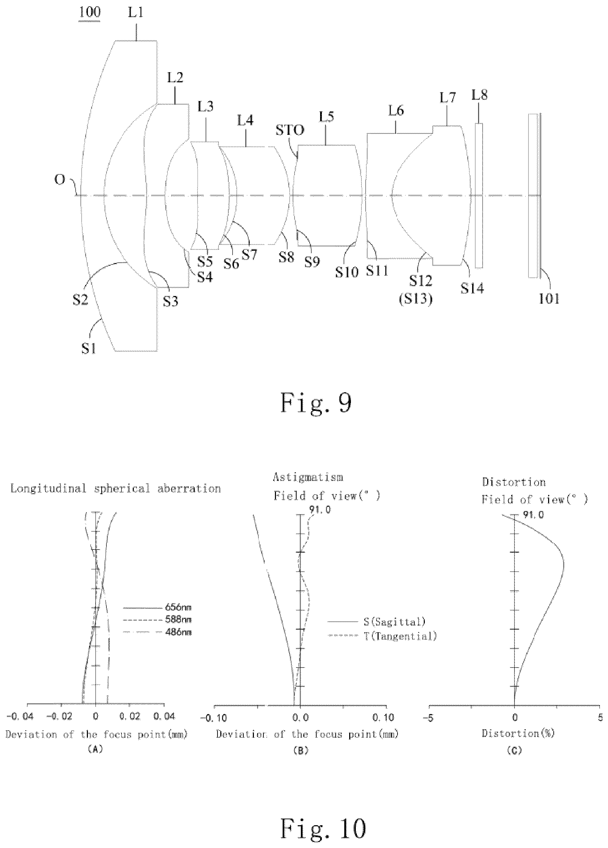

Referring to FIG. 9, FIG. 9 is a schematic structural diagram of the optical lens 100 of the fifth embodiment. The optical lens 100 sequentially includes a first lens L1, a second lens L2, a third lens L3, a fourth lens L4, an aperture STO, a fifth lens L5, a sixth lens L6, a seventh lens L7, a filter L8, and a protective glass L9 along an optical axis O from an object side to an imaging side. The materials of the first lens L1, the second lens L2, the third lens L3, the fourth lens L4, the fifth lens L5, the sixth lens L6 and the seventh lens L7 can be found in Table 9.

Further, the refractive power of each lens in the fifth embodiment is consistent with the refractive power of each lens in the in the first embodiment, and the difference between a surface shape of each lens in the fifth embodiment and the surface shape of each lens in the first embodiment is that: an object side surface S3 of the second lens L2 is concave near the optical axis, and an object side surface S11 of the sixth lens L6 is convex near the optical axis.

Taking a focal length f=2.328mm of the optical lens 100, the maximum field of view FOV=182° of the optical lens 100, a total optical length TTL=19.960mm of the optical lens 100, and an aperture number FNO=2.0 as an example, and other parameters of the optical lens 100 are given in Table 9 and Table 10. Wherein, the definition of each parameter can be obtained from the description of the foregoing embodiments and will not be described again here. It can be understood that the units of Y radius, thickness, and focal length in Table 9 are all mm, the reference wavelength for the refractive index and Abbe number of each lens in Table 9 is 587.6nm, and the reference wavelength for the focal length of each lens in Table 9 is 588nm.

Table 9

| Fifth embodiment | | | | | | | | |
|---|---|---|---|---|---|---|---|---|
| f=2.328mm, FNO=2.0, FOV=182°, TTL=19.960mm | | | | | | | | |
| Surface number | Surface name | Surface type | Y radius | Thickness | Material | Refractive index | Abbe number | Focal length |
| | Object side | sphere | infinity | infinity | | | | |
| 1 | First lens | sphere | 16.061 | 1.000 | glass | 1.773 | 49.599 | -8.802 |
| 2 | | sphere | 4.647 | 1.859 | | | | |
| 3 | Second lens | asphere | -7.300 | 0.800 | plastic | 1.536 | 55.981 | -5.718 |
| 4 | | asphere | 5.503 | 1.440 | | | | |

(continued)

| Fifth embodiment | | | | | | | | |
|---|---|---|---|---|---|---|---|---|
| f=2.328mm, FNO=2.0, FOV=182°, TTL=19.960mm | | | | | | | | |
| Surface number | Surface name | Surface type | Y radius | Thickness | Material | Refractive index | Abbe number | Focal length |
| 5 | Third lens | asphere | 16.877 | 1.348 | plastic | 1.640 | 23.529 | 11.994 |
| 6 | | asphere | -13.631 | 0.344 | | | | |
| 7 | Fourth lens | asphere | -3.732 | 2.254 | plastic | 1.536 | 55.981 | 24.637 |
| 8 | | asphere | -3.525 | 0.382 | | | | |
| 9 | Aperture | sphere | infinity | -0.232 | | | | |
| 10 | Fifth lens | sphere | 6.905 | 3.003 | glass | 1.603 | 65.460 | 6.657 |
| 11 | | sphere | -8.018 | 0.150 | | | | |
| 12 | Sixth lens | asphere | 16.113 | 1.143 | plastic | 1.640 | 23.529 | -3.429 |
| 13 | Seventh lens | asphere | 1.877 | 3.420 | plastic | 1.536 | 55.981 | 3.223 |
| 14 | | asphere | -8.043 | 0.200 | | | | |
| 15 | Filter | sphere | infinity | 0.300 | glass | 1.517 | 64.199 | |
| 16 | | sphere | infinity | 2.000 | | | | |
| 17 | Protective glass | sphere | infinity | 0.400 | glass | 1.517 | 64.199 | |
| 18 | | sphere | infinity | 0.150 | | | | |
| | Imaging surface | sphere | infinity | | | | | |

In the fifth embodiment, Table 10 shows the higher-order term coefficients that can be used for each aspherical lens in the fifth embodiment, wherein, each aspherical surface shape can be defined by the formula given in the first embodiment.

Table 10

| Fifth embodiment | | | | |
|---|---|---|---|---|
| Aspheric coefficient | | | | |
| Surface number | K | A4 | A6 | A8 | A10 |
|---|---|---|---|---|---|
| 3 | -1.8596E+01 | 6.5110E-04 | -4.8555E-05 | 9. 174E-06 | -1.2132E-06 |
| 4 | 6.0702E-01 | 1.9753E-04 | -1.6631E-05 | 1. 091E-06 | -1.4565E-07 |
| 5 | 0.0000E+00 | 1.1908E-04 | -1.9089E-05 | 2. 230E-06 | -2.3780E-07 |
| 6 | 4.3712E+00 | 1.4105E-04 | -1.4283E-05 | 5. 595E-06 | -9.1359E-07 |
| 7 | 1.3601E+00 | -1.7036E-03 | 5.5118E-05 | -1.1400E-05 | 1.6085E-06 |
| 8 | 8.6111E- 1 | -1.5056E-03 | -6.0716E-05 | 1. 981E-05 | -1.4231E-06 |
| 12 | 8.4321E-01 | -2.2944E-03 | 1.4288E-04 | -4.3607E-05 | 1.8221E-06 |
| 13 | -6.2623E-01 | -1.2936E-02 | -7.4017E-04 | 4. 783E-04 | -6.5877E-05 |
| 14 | -2.4368E+01 | -1.0863E-03 | 4.6784E-04 | -3.5028E-05 | -4.0761E-06 |
| Surface number | A12 | A14 | A16 | A18 | A20 |
| 3 | 9.2108E-08 | -3.7204E-09 | 6.1051E-11 | 0.0000E+00 | 0.0000E+00 |
| 4 | 8.4468E-09 | -2.6856E-10 | 3.4479E-12 | 0.0000E+00 | 0.0000E+00 |
| 5 | 1.4644E-08 | -4.8136E-10 | 6.3877E-12 | 0.0000E+00 | 0.0000E+00 |

(continued)

| Surface number | A12 | A14 | A16 | A18 | A20 |
|---|---|---|---|---|---|
| 6 | 8.2312E-08 | -3.9065E-09 | 7.5878E-11 | 0.0000E+00 | 0.0000E+00 |
| 7 | -1.3366E-07 | 6.2729E-09 | -1.1515E-10 | 0.0000E+00 | 0.0000E+00 |
| 8 | 8.0808E-08 | -2.3565E-09 | 2.6978E-11 | 0.0000E+00 | 0.0000E+00 |
| 12 | -2.1504E-06 | 6.5692E-07 | -6.1905E-08 | 0.0000E+00 | 0.0000E+00 |
| 13 | -5.8769E-06 | 1.8787E-06 | -1.1817E-07 | 0.0000E+00 | 0.0000E+00 |
| 14 | 1.8825E-07 | 5.1701E-08 | -4.2049E-09 | 0.0000E+00 | 0.0000E+00 |

Referring to FIG. 10, it can be seen from (A) a longitudinal spherical aberration diagram, (B) an astigmatism curve diagram, and (C) a distortion diagram in FIG. 10 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 10, (B) in Figure 10, and (C) in Figure 10, please refer to the contents described in (A) in Figure 2, (B in Figure 2, and (C) in Figure 2 in the first embodiment and will not be described again here.

Referring to Table 11, Table 11 is a summary of the ratios of each relational expression in the first to fifth embodiments of the present disclosure.

Table 11

| Relational expression/Embodiment | First embodiment | Second embodiment | Third embodiment | Fourth embodiment | Fifth embodiment |
|---|---|---|---|---|---|
| 165°<FOV<195° | 182° | 182° | 181° | 182° | 182° |
| 8<TTL/f<9 | 8.302 | 8.289 | 8.270 | 8.361 | 8.574 |
| -9.0<R5/R6<0 | -0.65 | -6.59 | -1.80 | -3.10 | -1.24 |
| 1.0<R7/R8<1.4 | 1.15 | 1.21 | 1.25 | 1.22 | 1.06 |
| 0.3<T3/f<0.7 | 0.52 | 0.48 | 0.50 | 0.53 | 0.58 |
| 0.7<T4/f<1.2 | 0.88 | 0.99 | 0.98 | 1.02 | 0.97 |
| 1.1<T5/f<1.6 | 1.46 | 1.45 | 1.43 | 1.43 | 1.29 |
| 0.3<f3/f4<1.5 | 0.81 | 0.96 | 0.94 | 1.19 | 0.49 |
| 2.2<f567/f<3 | 2.52 | 2.71 | 2.69 | 2.68 | 2.54 |
| IDISI<5% | 2.3% | 2.5% | 2.3% | 2.1% | 0.8% |
| -4<f34/f12<-2 | -3.07 | -2.65 | -2.60 | -2.57 | -3.17 |
| vd3<30 | 23.53 | 23.53 | 23.53 | 23.53 | 23.53 |
| vd5>45 | 63.41 | 67.00 | 60.21 | 65.46 | 65.46 |

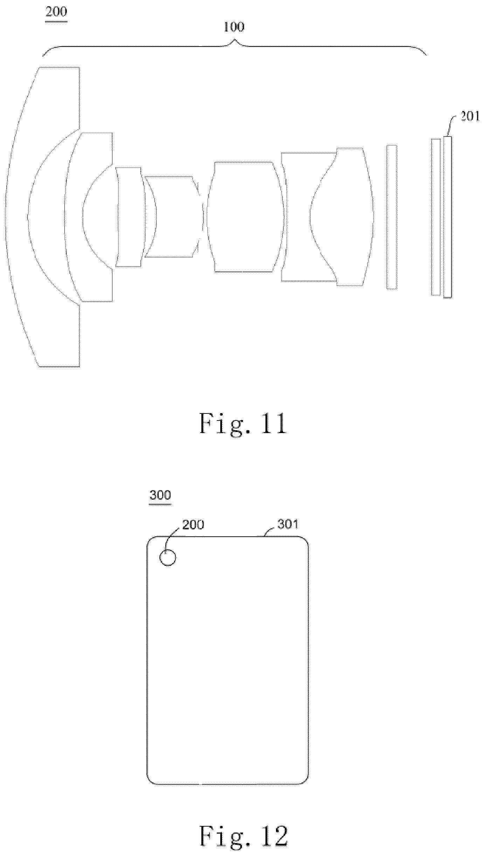

Referring to FIG. 11, the present disclosure also discloses an image module. The image module 200 includes a photosensitive chip 201 and the above-mentioned optical lens 100. The photosensitive chip 201 is arranged on the imaging side of the optical lens 100. The optical lens 100 can be used to receive light signal of the object being photographed and project it to the photosensitive chip 201, and the photosensitive chip 201 can be used to convert the light signal corresponding to the object being photographed into an image signal. It can be understood that the image module 200 with the above-mentioned optical lens 100 can have a larger field of view, better capture more scene content, enrich the imaging information of the optical lens 100, and at the same time, control the aberration of the optical lens 100, improve the resolution of the optical lens 100 and improve the imaging quality of the optical lens 100. In addition, it is also beneficial to control the total optical length of the optical lens 100 within an appropriate range while the optical lens 100 has a large field of view, thereby meeting the miniaturization design requirements of the optical lens 100.

Referring to FIG. 12, the present disclosure also discloses an electronic device. The electronic device 300 includes a housing 301 and the above-mentioned image module 200. The image module 200 is arranged in the housing 301 to obtain image information. The electronic device 300 may be, but is not limited to, a mobile phone, a tablet, a laptop, a smart watch, or a monitor. It can be understood that the electronic device 300 with the above-mentioned image module 200 also has all the technical effects of the above-mentioned optical lens 100. That is, the electronic device 300 can have a larger field of view, better capture more scene content, enrich the imaging information of the optical lens 100, and at the same time, control the aberration of the optical lens 100, improve the resolution of the optical lens 100 and improve the imaging quality of the optical lens 100. In addition, it is also beneficial to control the total optical length of the optical lens 100 within an appropriate range while the optical lens 100 has a large field of view to meet the miniaturization design requirements of the optical lens 100, thereby facilitating the realization of a thin and light design of the electronic device 300.

The optical lens, image module and electronic device disclosed in the embodiments of the present invention have been introduced in detail above. Specific examples are used in this application to illustrate the principles and implementation methods of the present invention. The description of the above embodiments is only used to help understand the optical lens, image module and electronic device of the invention and its core idea; at the same time, for those of ordinary skill in the field, there will be changes in the specific implementation and application scope based on the ideas of the present invention within the scope of the claims. In summary, the content of this description should not be understood as a limitation of the present invention.

## Claims

1. An optical lens (100), from an object side to an imaging side along an optical axis (O), sequentially comprising:

   a first lens (L1) having negative refractive power, an object side surface (S1) of the first lens (L1) being convex near the optical axis (O), and an imaging side surface (S2) of the first lens (L1) being concave near the optical axis (O);
   a second lens (L2) having negative refractive power, an imaging side surface (S4) of the second lens (L2) being concave near the optical axis (O);
   a third lens (L3) having positive refractive power, an object side surface (S5) of the third lens (L3) being convex near the optical axis (O), an imaging side surface (S6) of the third lens (L3) being convex near the optical axis (O);
   a fourth lens (L4) having positive refractive power, an object side surface (S7) of the fourth lens (L4) being concave near the optical axis (O), an imaging side surface (S8) of the fourth lens (L4) being convex near the optical axis (O);
   a fifth lens (L5) having positive refractive power, an object side surface (S9) of the fifth lens (L5) being convex near the optical axis (O), an imaging side surface (S10) of the fifth lens (L5) being convex near the optical axis (O);
   a sixth lens (L6) having negative refractive power, an imaging side surface (S12) of the sixth lens (L6) being concave near the optical axis (O);
   a seventh lens (L7) having positive refractive power, an object side surface (S13) of the seventh lens (L7) being convex near the optical axis (O), an imaging side surface (S14) of the seventh lens (L7) being convex near the optical axis (O), the imaging side surface (S12) of the sixth lens (L6) and the object side surface (S13) of the seventh lens (L7) being cemented to form a cemented lens; and
   an image plane (101);
   **characterised in that** the optical lens (100) satisfies the following conditional expressions:

$$8<TTL/f<9, \text{ and } 165°<FOV<195°;$$

   wherein, TTL is a distance from the object side surface (S1) of the first lens (L1) to the image plane (101) of the optical lens (100) along the optical axis (O), f is a focal length of the optical lens (100), and FOV is the maximum field of view of the optical lens (100).

2. The optical lens (100) of claim 1, wherein the optical lens (100) further satisfies at least one of following conditional expressions (1) and (2):

$$(1) \ -9.0<R5/R6<0, 0<R5, R6<0;$$

$$(2) \ 1.0<R7/R8<1.4, R7<0, R8<0;$$

   wherein, R5 is a radius of curvature of the object side surface (S5) of the third lens (L3) at the optical axis (O), R6 is a radius of curvature of the imaging side surface (S6) of the third lens (L3) at the optical axis (O), R7 is a radius of curvature of the object side surface (S7) of the fourth lens (L4) at the optical axis (O), and R8 is a radius of curvature of the imaging side surface (S8) of the fourth lens (L4) at the optical axis (O).

3. The optical lens (100) of claim 1, wherein the optical lens (100) further satisfies following conditional expression:

$$0.3<T3/f<0.7;$$

wherein, f is the focal length of the optical lens (100), and T3 is a thickness of the third lens (L3) at the optical axis (O).

4. The optical lens (100) of claim 1, wherein the optical lens (100) further satisfies following conditional expression:

$$0.7<T4/f<1.2;$$

wherein, f is the focal length of the optical lens (100), and T4 is a thickness of the fourth lens (L4) at the optical axis.

5. The optical lens (100) of claim 1, wherein the optical lens (100) further satisfies following conditional expression:

$$1.1<T5/f<1.6;$$

wherein, f is the focal length of the optical lens (100), and T5 is a thickness of the fifth lens (L5) at the optical axis (O).

6. The optical lens (100) of claim 1, wherein the optical lens (100) further satisfies following conditional expression:

$$0.3<f3/f4<1.5;$$

wherein, f3 is a focal length of the third lens (L3), and f4 is a focal length of the fourth lens (L4).

7. The optical lens (100) of claim 1, wherein the optical lens (100) further satisfies at least one of following conditional expressions:

$$2.2<f567/f<3;$$

$$|DIS|<5\%;$$

wherein, f is the focal length of the optical lens (100), f567 is a combined focal length of the fifth lens (L5), the sixth lens (L6) and the seventh lens (L7), and DIS is the maximum value of f-$\theta$ distortion of the optical lens (100).

8. The optical lens (100) of claim 1, wherein the optical lens (100) further satisfies following conditional expression:

$$-4<f34/f12<-2;$$

wherein, f12 is a combined focal length of the first lens (L1) and the second lens (L2), and f34 is a combined focal length of the third lens (L3) and the fourth lens (L4).

9. An image module (200) comprising a photosensitive chip (201) and the optical lens (100) of any one of claims 1 to 8, the photosensitive chip (201) is arranged on the imaging side of the optical lens (100).

10. An electronic device (300) comprising a housing (301) and the image module (200) of claim 9, the image module (200) being arranged in the housing (301).

**Patentansprüche**

1. Eine optische Linse (100), die von einer Objektseite zu einer Bildseite entlang einer optischen Achse (O) der Reihe nach Folgendes umfasst:

eine erste Linse (L1) mit negativer Brechkraft, wobei eine objektseitige Oberfläche (S1) der ersten Linse (L1) in der Nähe der optischen Achse (O) konvex ist und eine bildseitige Oberfläche (S2) der ersten Linse (L1) in der Nähe der optischen Achse (O) konkav ist;

eine zweite Linse (L2) mit negativer Brechkraft, wobei eine bildseitige Oberfläche (S4) der zweiten Linse (L2) in der Nähe der optischen Achse (O) konkav ist;

eine dritte Linse (L3) mit positiver Brechkraft, wobei eine objektseitige Oberfläche (S5) der dritten Linse (L3) in der Nähe der optischen Achse (O) konvex ist und eine bildseitige Oberfläche (S6) der dritten Linse (L3) in der Nähe der optischen Achse (O) konvex ist;

eine vierte Linse (L4) mit positiver Brechkraft, wobei eine objektseitige Oberfläche (S7) der vierten Linse (L4) in der Nähe der optischen Achse (O) konkav ist und eine bildseitige Oberfläche (S8) der vierten Linse (L4) in der Nähe der optischen Achse (O) konvex ist;

eine fünfte Linse (L5) mit positiver Brechkraft, wobei eine objektseitige Oberfläche (S9) der fünften Linse (L5) in der Nähe der optischen Achse (O) konvex ist und eine bildseitige Oberfläche (S10) der fünften Linse (L5) in der Nähe der optischen Achse (O) konvex ist;

eine sechste Linse (L6) mit negativer Brechkraft, wobei eine bildseitige Oberfläche (S12) der sechsten Linse (L6) in der Nähe der optischen Achse (O) konkav ist;

eine siebte Linse (L7) mit positiver Brechkraft, wobei eine objektseitige Oberfläche (S13) der siebten Linse (L7) in der Nähe der optischen Achse (O) konvex ist, eine bildseitige Oberfläche (S14) der siebten Linse (L7) in der Nähe der optischen Achse (O) konvex ist, wobei die bildseitige Oberfläche (S12) der sechsten Linse (L6) und die objektseitige Oberfläche (S13) der siebten Linse (L7) miteinander verkittet sind, um eine Kittlinse zu bilden; und eine Bildebene (101);

**dadurch gekennzeichnet, dass** die optische Linse (100) die folgenden bedingten Ausdrücke erfüllt:

$$8 < TTL/f < 9,$$

and 165°<FOV<195°;

wobei TTL ein Abstand von der objektseitigen Oberfläche (S1) der ersten Linse (L1) zur Bildebene (101) der optischen Linse (100) entlang der optischen Achse (O) ist, f eine Brennweite der optischen Linse (100) ist und FOV das maximale Sichtfeld der optischen Linse (100) ist.

2. Die optische Linse (100) nach Anspruch 1, wobei die optische Linse (100) ferner mindestens einen der folgenden bedingten Ausdrücke (1) und (2) erfüllt:

$$(1)\ -9.0 < R5/R6 < 0,\ 0 < R5,\ R6 < 0;$$

$$(2)\ 1.0 < R7/R8 < 1.4,\ R7 < 0,\ R8 < 0;$$

wobei R5 ein Krümmungsradius der objektseitigen Oberfläche (S5) der dritten Linse (L3) an der optischen Achse (O) ist, R6 ein Krümmungsradius der bildseitigen Oberfläche (S6) der dritten Linse (L3) an der optischen Achse (O) ist, R7 ein Krümmungsradius der objektseitigen Oberfläche (S7) der vierten Linse (L4) an der optischen Achse (O) ist und R8 ein Krümmungsradius der bildseitigen Oberfläche (S8) der vierten Linse (L4) an der optischen Achse (O) ist.

3. Die optische Linse (100) nach Anspruch 1, wobei die optische Linse (100) ferner den folgenden bedingten Ausdruck erfüllt:

$$0.3 < T3/f < 0.7;$$

wobei f die Brennweite der optischen Linse (100) ist und T3 eine Dicke der dritten Linse (L3) an der optischen Achse (O) ist.

4. Die optische Linse (100) nach Anspruch 1, wobei die optische Linse (100) ferner den folgenden bedingten Ausdruck erfüllt:

$$0.7<T4/f<1.2;$$

wobei f die Brennweite der optischen Linse (100) ist und T4 eine Dicke der vierten Linse (L4) an der optischen Achse ist.

5. Die optische Linse (100) nach Anspruch 1, wobei die optische Linse (100) ferner den folgenden bedingten Ausdruck erfüllt:

$$1.1<T5/f<1.6;$$

wobei f die Brennweite der optischen Linse (100) ist und T5 eine Dicke der fünften Linse (L5) an der optischen Achse (O) ist.

6. Die optische Linse (100) nach Anspruch 1, wobei die optische Linse (100) ferner den folgenden bedingten Ausdruck erfüllt:

$$0.3<f3/f4<1.5;$$

wobei f3 eine Brennweite der dritten Linse (L3) ist und f4 eine Brennweite der vierten Linse (L4) ist.

7. Die optische Linse (100) nach Anspruch 1, wobei die optische Linse (100) ferner mindestens einen der folgenden bedingten Ausdrücke erfüllt:

$$2.2<f567/f<3;$$

$$|DIS|<5\ \%,$$

wobei f die Brennweite der optischen Linse (100) ist, f567 eine kombinierte Brennweite der fünften Linse (L5), der sechsten Linse (L6) und der siebten Linse (L7) ist und DIS der Maximalwert der f-θ Verzeichnung der optischen Linse (100) ist.

8. Die optische Linse (100) nach Anspruch 1, wobei die optische Linse (100) ferner den folgenden bedingten Ausdruck erfüllt:

$$-4<f34/f12<-2;$$

wobei f12 eine kombinierte Brennweite der ersten Linse (L1) und der zweiten Linse (L2) ist und f34 eine kombinierte Brennweite der dritten Linse (L3) und der vierten Linse (L4) ist.

9. Ein Bildmodul (200), umfassend einen lichtempfindlichen Chip (201) und die optische Linse (100) nach einem der Ansprüche 1 bis 8, wobei der lichtempfindliche Chip (201) auf der Bildseite der optischen Linse (100) angeordnet ist.

10. Eine elektronische Vorrichtung (300), umfassend ein Gehäuse (301) und das Bildmodul (200) nach Anspruch 9, wobei das Bildmodul (200) in dem Gehäuse (301) angeordnet ist.

**Revendications**

1. Une lentille optique (100), d'un côté objet vers un côté image le long d'un axe optique (O), comprenant séquentiellement:

une première lentille (L1) ayant une puissance de réfraction négative, une surface côté objet (S1) de la première lentille (L1) étant convexe près de l'axe optique (O), et une surface côté image (S2) de la première lentille (L1) étant concave près de l'axe optique (O);

une deuxième lentille (L2) ayant une puissance de réfraction négative, une surface côté image (S4) de la deuxième lentille (L2) étant concave près de l'axe optique (O);

une troisième lentille (L3) ayant une puissance de réfraction positive, une surface côté objet (S5) de la troisième lentille (L3) étant convexe près de l'axe optique (O), une surface côté image (S6) de la troisième lentille (L3) étant convexe près de l'axe optique (O);

une quatrième lentille (L4) ayant une puissance de réfraction positive, une surface côté objet (S7) de la quatrième lentille (L4) étant concave près de l'axe optique (O), une surface côté image (S8) de la quatrième lentille (L4) étant convexe près de l'axe optique (O);

une cinquième lentille (L5) ayant une puissance de réfraction positive, une surface côté objet (S9) de la cinquième lentille (L5) étant convexe près de l'axe optique (O), une surface côté image (S10) de la cinquième lentille (L5) étant convexe près de l'axe optique (O);

une sixième lentille (L6) ayant une puissance de réfraction négative, une surface côté image (S12) de la sixième lentille (L6) étant concave près de l'axe optique (O);

une septième lentille (L7) ayant une puissance de réfraction positive, une surface côté objet (S13) de la septième lentille (L7) étant convexe près de l'axe optique (O), une surface côté image (S14) de la septième lentille (L7) étant convexe près de l'axe optique (O), la surface côté image (S12) de la sixième lentille (L6) et la surface côté objet (S13) de la septième lentille (L7) étant cimentées pour former une lentille cimentée; et

un plan image (101);

**caractérisée en ce que** la lentille optique (100) satisfait aux expressions conditionnelles suivantes:

$$8 < TTL/f < 9, \text{ et } 165° < FOV < 195°;$$

où, TTL est une distance de la surface côté objet (S1) de la première lentille (L1) au plan image (101) de la lentille optique (100) le long de l'axe optique (O), f est une longueur focale de la lentille optique (100), et FOV est le champ de vision maximal de la lentille optique (100).

2. La lentille optique (100) selon la revendication 1, dans laquelle la lentille optique (100) satisfait en outre au moins une des expressions conditionnelles suivantes (1) et (2):

$$(1) \ -9.0 < R5/R6 < 0, \ 0 < R5, \ R6 < 0;$$

$$(2) \ 1.0 < R7/R8 < 1.4, \ R7 < 0, \ R8 < 0;$$

où, R5 est un rayon de courbure de la surface côté objet (S5) de la troisième lentille (L3) au niveau de l'axe optique (O), R6 est un rayon de courbure de la surface côté image (S6) de la troisième lentille (L3) au niveau de l'axe optique (O), R7 est un rayon de courbure de la surface côté objet (S7) de la quatrième lentille (L4) au niveau de l'axe optique (O), et R8 est un rayon de courbure de la surface côté image (S8) de la quatrième lentille (L4) au niveau de l'axe optique (O).

3. La lentille optique (100) selon la revendication 1, dans laquelle la lentille optique (100) satisfait en outre l'expression conditionnelle suivante:

$$0.3 < T3/f < 0.7;$$

où, f est la longueur focale de la lentille optique (100), et T3 est une épaisseur de la troisième lentille (L3) au niveau de l'axe optique (O).

4. La lentille optique (100) selon la revendication 1, dans laquelle la lentille optique (100) satisfait en outre l'expression conditionnelle suivante:

$$0.7 < T4/f < 1.2;$$

où, f est la longueur focale de la lentille optique (100), et T4 est une épaisseur de la quatrième lentille (L4) au niveau de l'axe optique.

5. La lentille optique (100) selon la revendication 1, dans laquelle la lentille optique (100) satisfait en outre l'expression conditionnelle suivante:

$$1.1 < T5/f < 1.6;$$

où, f est la longueur focale de la lentille optique (100), et T5 est une épaisseur de la cinquième lentille (L5) au niveau de l'axe optique (O).

6. La lentille optique (100) selon la revendication 1, dans laquelle la lentille optique (100) satisfait en outre l'expression conditionnelle suivante:

$$0.3 < f3/f4 < 1.5;$$

où, f3 est une longueur focale de la troisième lentille (L3), et f4 est une longueur focale de la quatrième lentille (L4).

7. La lentille optique (100) selon la revendication 1, dans laquelle la lentille optique (100) satisfait en outre au moins une des expressions conditionnelles suivantes:

$$2.2 < f567/f < 3;$$

$$|DIS| < 5\ \%,$$

où, f est la longueur focale de la lentille optique (100), f567 est une longueur focale combinée de la cinquième lentille (L5), de la sixième lentille (L6) et de la septième lentille (L7), et DIS est la valeur maximale de la distorsion f-$\theta$ de la lentille optique (100).

8. La lentille optique (100) selon la revendication 1, dans laquelle la lentille optique (100) satisfait en outre l'expression conditionnelle suivante:

$$-4 < f34/f12 < -2;$$

où, f12 est une longueur focale combinée de la première lentille (L1) et de la deuxième lentille (L2), et f34 est une longueur focale combinée de la troisième lentille (L3) et de la quatrième lentille (L4).

9. Un module d'image (200) comprenant une puce photosensible (201) et la lentille optique (100) selon l'une quelconque des revendications 1 à 8, la puce photosensible (201) est disposée du côté image de la lentille optique (100).

10. Un dispositif électronique (300) comprenant un boîtier (301) et le module d'image (200) selon la revendication 9, le module d'image (200) étant disposé dans le boîtier (301).

Fig. 1

Fig. 2

Fig. 3

Fig. 4

Fig. 5

Fig. 6

Fig. 7

Fig. 8

Fig. 9

Fig. 10

Fig. 11

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115494620 A